# EUROPEAN PATENT APPLICATION

(11) **EP 2 719 673 A2**
(43) Date of publication of application: **16.04.2014**
(21) Application number: 13188591.5
(22) Date of filing: 14.10.2013
(51) Int. Cl.: C04B 26/16, C04B 14/06, C04B 111/00

(54) **Surfacing mixture**

(30) Priority: 12.10.2012 GB 201218355
(71) Applicant: Star Uretech Ltd, Blackburn, Lancashire BB2 4AY (GB)
(72) Inventor: Hughes, Anthony Harold, Rossendale, Lancashire BB4 8JQ (GB); Almond, Mark James, Lower Darwen, Lancashire BB3 0SD (GB)
(74) Representative: Wilson Gunn

(57) **Abstract**

The present invention relates to a mixture for use in the creation of surfacing for e.g. roads and pathways, involving a chemical binder composition binding particles of aggregate material to each other and to surfaces to be covered, and more particularly to the use of a chemical binder in the composition that is more efficient than commercially available binder compositions used for this purpose, and is able to be used successfully in adverse weather conditions.

## Description

The present invention relates to a mixture for use in the creation of surfacing for *e.g.* roads and pathways, involving a chemical binder composition binding particles of aggregate material to each other and to surfaces to be covered, and more particularly to the use of a chemical binder in the composition that is more efficient than commercially available binder compositions used for this purpose, and is able to be used successfully in adverse weather conditions.

The use of a synthetic resin adhesive or binder to bond particles of aggregate together and also to surfaces to be covered has been established for some time, particularly in the highways sector where this concept is used for 'high-friction surfacing' on critical areas of road surfacing such as bends and approaches to junctions and crossings, where traffic is constantly braking. This concept of bonding aggregate also has attractions for other sectors and is being used to create aesthetically pleasing areas in, for example, architectural, streetscape and hard landscaping situations such as driveways, tree-pits and planters.

When considering aggregate surfacing for roads, pathways, tree bases and hard landscaping in general, there are a number of advantages in using bonded aggregate rather than loose laid aggregate. These include:
- The bonded aggregate is not displaced by vehicle or pedestrian traffic;
- The bonded aggregate does not 'rut' or 'track' where vehicles constantly take the same route;
- Regular raking of the bonded aggregate is not necessary;
- There is greater design freedom, enabling the creation of highly decorative surfacings, such as those including permanent curves, edge definition, the combining of colours, creation of intricate patterns, etc.;
- The surface is more readily cleaned; and
- Rubbish does not become half-buried in bonded aggregate, making it look unsightly.

There are two types of decorative resin surfacing techniques that are commonly used by those skilled in the art, and these are called 'Resin Bound Surfacing' and 'Resin Bonded Surfacing'.

'Resin bound surfacing', or 'screed surfacing' as it is also known, defines a technique where aggregate and binder resin are mixed together in a mechanical, forced action mixer, and the resultant mix is then screeded or spread onto the work area to be treated.

This system involves a screed in which aggregate particles are bound together with a resin binder. The principle with the screed is for all the aggregate particles to be completely coated with resin and compacted properly to maximise contact points between the aggregate particles, resulting in a matrix that is packed as densely as possible, in order to achieve maximum strength for the resultant surfacing.

A screed system is laid to a defined depth, which should typically be at least three times the depth of the largest aggregate particle. This system hence forms what is considered a three-dimensional matrix. The screed system should be used when aggregate particles of 5 mm or larger are being considered for use in the creation of the surfacing, although smaller aggregate can also be used in this system.

On the other hand, 'resin bonded surfacing', which is also known as 'coat and scatter' surfacing, defines a system where a layer of bonding resin is applied to a surface substrate - such as a pathway or road - and the aggregate particles are scattered generously onto the resin while it is still in a liquid state. Once the resin has cured, the excess aggregate can then be brushed or vacuumed off to leave a stable surface. This creates a topping that is essentially a single layer of aggregate, forming what is considered to be a two-dimensional surface covering.

The principle with the 'coat and scatter' system is for about 50-60% of each individual aggregate particle to be embedded into the resin layer. This is the optimum 'particle bond profile' and is the best compromise between the area of the aggregate particle that is embedded into the resin to ensure that it is securely bonded by the resin, and the area of the particle that remains visible to provide the aesthetic effect of the decorative surfacing.

In order to achieve the best particle packing and thereby obscuring the underlying resin, a small variation in particle size is advantageous, so that a nominal 3 mm average aggregate size aggregate should also contain some particles of 1-2 mm, although particles having a size of from 3-5 mm can also be used. In general, aggregate with a size of 3 mm or smaller has been found to give the best wear characteristics or 'erosion index', suffering less from 'flick-out' under traffic conditions, i. e. where particles of aggregate become free from the resin and are removed from the surface, thus damaging the surface. However, some inclusion of larger particles can give a more pleasing and less gritty appearance.

With particle sizes of 6 mm and over, the gaps between the particles, even when packed as densely as possible, start to become visually more apparent, even if the colour of the bonding resin underneath is similar to the colour of the aggregate. For this reason, using the 'coat and scatter' method, the particle size should not normally exceed 5 mm.

These different modes of surfacing typically employ different resin systems, although both give the appearance of loose aggregate, but without the attendant problems of gradual displacement and spread of aggregate particles onto adjoining areas, rutting from traffic or a build-up of partially buried and trapped rubbish.

Correct choice of aggregate is important to optimise the long-term performance of a decorative aggregate surface and while appearance is usually the first consideration, other factors are pertinent. Hardness is a particularly important property, especially so in a 'coat and scatter' system, as a soft aggregate may be crushed under heavier traffic conditions.

Aggregates with a matt surface bond better than those with a glassy surface, and aggregate such as calcined bauxite aggregate will give the best long-term performance with less particle loss from the surface. "Terracotta" is a red granite which also has good long term wearing properties.

Aggregates vary considerably in shape, size and size distribution, colour and hardness, and some are relatively local to certain areas incurring high transportation costs to deliver them far afield. However, the main consideration in decorative surfacing will often be the colour of the aggregate.

With a screed system, there are more elements to consider and these are governed primarily by traffic loadings, particle size and the aggregate substrate itself.

Tree-pits are perhaps the simplest to consider where a relatively large particle size of from 5 or 6 mm or 6-8 mm, or even 6-10 mm is used to ensure easy permeation of water to the tree roots. In such a surfacing, the sub-layer will often have to be laid onto an unbound substrate such as soil or the like, so a layer of the prescribed aggregate should be laid loose onto the sub-layer and the depth of the aggregate should allow for the fact that the substrate has limited structural integrity, and be a minimum of about 30 mm. A tree pit is not subjected to traffic to any significant extent and therefore an 'engineered' particle blend for greater strength is not relevant or important.

The overall strength of a Screed system can be greatly increased by 'engineering' the particle packing density to increase the point contact within the matrix. This will clearly be important if the area concerned is subjected to vehicle traffic.

Further, the roughness of the overall surface will be reduced as any projecting aggregate points are pressed down. However, if slip-resistance were to be a primary consideration, the surface should not be rolled.

With both screed and coat and scatter installations, the substrate must generally be clean, dry and free of all loose and friable material. Any oil contamination must be removed, as this will prevent adhesion of resin to the substrate.

A synthetic resin adhesive or binder is used to bind the aggregate particles together and/or to a surface. Typically, the synthetic resin adhesive or binder is a polymer binder resin. Commercially available binder resins for this purpose include polyurethane (PU)-based resins.

In the broad area of polyurethane chemistry, there are many types of polymer which use isocyanates in the polymer formation. However, strictly speaking, a polyurethane is made from a reaction of an isocyanate with materials containing a hydroxy (OH) functional group. If the hydroxy-containing compounds are replaced by amines, then a polyurea is produced, but these are often also referred to as polyurethanes.

The reactive hydroxy-containing compounds can be, for example, polyether, polyester, or natural compounds such as castor oil. Water is a hydroxy-containing compound and can easily react with isocyanates, with the evolution of carbon dioxide. However, the evolution of CO₂ can cause problems such as foaming and reduced bonding strength if the water content is not controlled, for example, by thoroughly drying all the ingredients of the binder composition, and applying the binder composition to the aggregate under dry conditions.

One such commercially available binder resin is sold under the name Uretech CP22, manufactured by Star Uretech Ltd. Uretech CP22 is a PU resin based on castor oil, polyether and polyester reacted with an aliphatic isocyanate, and is classed as a two component PU system. The two components are mixed together to make the final polymer (which in this case is then mixed with aggregate and allowed to cure or react). However, any water that is present in the reaction system can interfere with this reaction, causing bubbling and foaming of the polymer. Because of this, CP22 can only be mixed with dry aggregate and used in dry weather conditions when rain is not expected.

Also, while CP22 cures efficiently at ambient temperature (i.e. 20-25°C), its rate of curing is very slow at colder temperatures, such as below 10°C. At a temperature of 3°C, the CP22 product takes over 24 hours to cure.

There are other resins, such as the products manufactured by Star Uretech under the trade names DSR and D-Flex, which are polyureas, made by the process in which a polyisocyanate reacts with water to produce a polyurea. They are able to overcome the foaming which normally occurs when this reaction takes place, because of the inclusion of carbon dioxide absorbing chemicals, for example, lime. They are not clear aggregate binders in the sense that the polyurethane CP22 is.

The DSR and D-Flex products are usually applied by the coat and scatter method onto damp surfaces because the uncured resin mix contains water which makes the resin mix compatible with the water on the aggregate substrate. However, while these products can be used in surfaces that are damp, they cannot be applied to surfaces that are actually wet. Additionally, the fact that these products are compatible with water can completely negate their use in rain, since hard rainfall can wash the uncured adhesive away. These products therefore are of minimal use in wet or rainy conditions.

Further, while the DSR and D-Flex product resins are able to cure at temperatures down to 3°C, at which temperature curing typically takes from 4-8 hours. However, this temperature is the practical limit, and curing below this temperature takes much longer.

It would therefore be desirable to be able to create aggregate surfaces using a chemical binder composition that is able to be used in adverse weather conditions such as rain, and at cold or freezing temperatures.

Polyaspartics were developed in the 1990s by Bayer Material Science AG, as detailed in the US patents US 5,126,170 and US 5,236,741. Polyaspartics constitute a class of polyurethane, and are specifically polyaspartic polyureas. However, they shall be known herein as 'polyaspartics'.

Polyaspartics are typically prepared by the initial Michael addition reaction of a maleic acid diester with a diamine, and subsequent reaction of the resultant aspartic product with an aliphatic or aromatic polyisocyanate.

Polyaspartics have been used part of as a coating or painting system for hard wearing floors, or for metal structures such as bridges, but to date they have never been known for or used as adhesive binder compounds, nor in the creation of surfaces involving the binding of aggregate particles.

The present inventors have used polyaspartics in the creation of aggregate surfaces and have surprisingly found that they exhibit properties which represent a significant improvement upon existing commercially available binder resins, particularly in the curing of the binder in adverse weather conditions such as in rain and at cold or freezing temperatures. Additionally, the polyaspartics have been surprisingly found to exhibit enhanced strength properties in comparison with commercially available binder resins already used in the creation of aggregate surfaces.

Therefore, in accordance with the present invention there is provided a mixture comprising:
a) a compound that is the product of a reaction between (i) a polyisocyanate component and (ii) an isocyanate-reactive component of the defined formula (I): 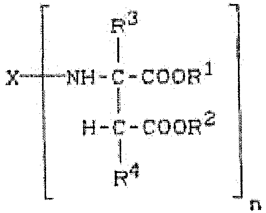 wherein:
   R¹ and R² may be the same or different and represent organic groups which are inert towards isocyanate groups at a temperature of about 100°C or below;
   R³ and R⁴ may be the same or different and represent hydrogen or organic groups which are inert towards isocyanate groups at a temperature of about 100°C or below;
   X represents an organic group which has a valency of n and is inert towards isocyanate groups at a temperature of about 100°C or below; and
   n represents an integer with a value of 1 or greater; and
b) an amount of a particulate aggregate material;
   wherein the mixture comprises between about 1 to about 10 parts of the compound defined in (a) per 100 parts of the particulate aggregate material.

Typically, the value of n is greater than 1, such as an integer of 2 or more. It is also envisaged within the invention that small amounts of an aspartic ester where n=1 may be incorporated into the reaction mixture, but where the average value of n in the isocyanate-reactive component of the defined formula (I) in the reaction mixture is 2 or greater. This would result in a polymer being formed that is effective as a binder resin in accordance with the invention.

According to one embodiment of the invention, it is envisaged that minor amounts of other isocyanate reactive product, such as, for example, a diamine component, can also be incorporated into the reaction mixture together with the polyisocyanate and the isocyanate-reactive component of the defmed formula (I). There may be up to about 10 wt%, typically 1-5 wt% of these minor components.

In comparison with the use of currently commercially available chemical binder materials, using the polyaspartic-based chemical binder formed via the reaction between components (i) and (ii), with aggregate in the mixture of the present invention, results in the following advantages:
i) The polyaspartic can be used at approximately half the binder level of the amounts of the existing commercially available binders that are conventionally used, and yet is still able to provide a stronger bound surface product.
   In comparative three point bend tests carried out by the inventors on a bound pebble block, using 2% polyaspartic binder (i. e. 2 parts of binder per 100 parts of the particulate aggregate material) against 5% CP22 binder, the 2% polyaspartic binder exhibited break strengths 25% greater than those of CP22 at 5% and the blocks bound using the polyaspartic binder at 5% were shown to be three times as strong as those bound with 5% CP22.
   All percentage amounts herein are given as weight percentages, unless specifically otherwise stated.
ii) Although the polyaspartic composition cures (reacts) at approximately the same rate as a commercially available product (CP22) at 25°C, it cures much faster at cold temperatures. CP22 is too slow to cure at temperatures below 10°C, whereas the polyaspartic binder composition cures within 4 hours at 0°C and even within 24 hours in a freezer at -18°C. Further, the DSR and D-Flex product resins are able to cure within about 4-8 hours at 3°C, but cannot cure below this temperature within any reasonable or practical length of time. This is quite remarkable as similar chemicals usually tend to cure at similar rates.
iii) The mixture containing the polyaspanic and aggregate can be applied whilst it is raining, and the composition still bonds securely to the substrate and still cures without bubbling or foaming. This is impossible with CP22 or any of the similar commercially available products.
   With the polyaspartic binder compound, once the aggregate particles have been coated with it, water has no effect. The binder does not wash off, even in torrential rain, and also does not react with water in any detrimental way, unlike the CP22 product, where the water interferes with the curing reaction, causing undesirable bubbling or foaming to occur.
iv) Additives or diluent components can be used to lower the cost, without a significant drop in binder quality.
   This is possible because the base polyaspartic polymer is so strong that it can be diluted and still give a high level of performance. If this is done with other commercially available products, the bonding strength of the resin would be weakened to commercially unacceptable levels.

These advantages are observed both when the polyaspartic binder compound is used either in a screed surfacing or in coat and scatter surfacing.

The combination of these characteristics means that these polyaspartic-based resin adhesives provide a very real benefit to companies involved in the creation and/or installation of surfacings, because they significantly widen the 'application window' for the installation of bonded aggregate surface systems. In practical terms, using the polyaspartic-based resin adhesives, external applications of the aggregate surfacing may be contemplated all year round, rather than being limited to non-rainy conditions, or only when the outside temperature is about 3°C or greater. Using these resin adhesives, such surfacing can be efficiently carried out during the winter months without problem.

In accordance with the present invention, it will be understood that any reference to the mixture of the invention may refer either to a particle of aggregate material that is substantially completely coated with the polyaspartic component, or to a mixture that contains an amount of the aggregate material that is not substantially completely coated with the polyaspartic component, in combination with an amount of the polyaspartic component.

Herein, the terms 'binder' and 'resin', as well as 'binder resin', are used interchangeably, and are intended to have the same meaning.

In the compound of general formula (I), the group X typically represents a divalent hydrocarbon group obtained by the removal of the amino groups from compounds of the general formula (II):

H₂N - R⁵ - NH₂ (II)

wherein R⁵ may be, for example, a C₁-C₁₂ substituted or unsubstituted alkyl group, or it may be a group that is able to introduce steric hindrance into the polyaspartic by, for example, the presence of one or two cycloalkyl ring structures that are themselves substituted or unsubstituted. The compound of the general formula (II) may be selected from compounds including, but not limited to, 1,4-diaminobutane, 1,6-diaminohexane, 2-methyl diaminopentane, 2,2,4- and 2,4,4-trimethyl-1,6-diaminohexane, 1-amino-3,3,5-trimethyl-5-aminomethyl-cyclohexane, 4,4'-diamino-dicyclohexyl methane or 3,3-dimethyl-4,4'-diamino-dicyclohexyl methane.

In the compound of general formula (I), the groups R1-R4 each are typically H or substituted or unsubstituted C₁-C₆ alkyl. More typically, R1 and R2 each are H, methyl or ethyl, while R3 and R4 are typically each H.

According to one embodiment of the invention, compounds of the general formula (I) that may be used in the reaction (a) is commercially available under the trade name Desmophen®, those being the products NH 1220, NH 1420, and NH 1520. Alternatively, a combination of any two, or of all three, of these compounds may be employed in accordance with the invention.

Suitable polyisocyanates for use as polyisocyanate component (i) that may be used in accordance with the invention for reaction with the isocyanate-reactive component include many polyisocyanates known within polyurethane chemistry, and which will be familiar to those skilled in the art, such as those of the general formula (III):

(O=C=N)ₙ-R⁶-N=C=O (III)

wherein R⁶ represents a C₁-C₁₅ substituted or unsubstituted alkyl group, a C₁-C₆ substituted or unsubstituted cycloalkyl group, or a C₁-C₆ substituted or unsubstituted aryl group. When the alkyl, cycloalkyl or aryl groups are substituted, they may be substituted by one or more C₁-C₆ alkyl, cycloalkyl or aryl groups; and
wherein n has a value of 0 or greater.

According to embodiments of the invention, the value of n may be an integer of 1, 2, 3, or even higher, as required.

Non-limiting examples of suitable polyisocyanates include polyisocyanates having a molecular weight of 168 to 300 include hexamethylene diisocyanate, 2,2,4-and/or 2,4,4-trimethyl-1,6-hexamethylene diisocyanate, dodecamethylene diisocyanate, 1,4-diisocyanatocyclohexane, 1-isocyanato-3,3,5-trimethyl-5-isocyanatomethylcyclohexane (IPDI), 2,4'-and/or 4,4'-diisocyanato-dicyclohexyl methane, 2,4-and/or 4,4'-diisocyanato-diphenyl methane and mixtures of these isomers with their higher homologues which are obtained in a known manner by the phosgenation of aniline/formaldehyde condensates, 2,4-and/or 2,6-diisocyanatotoluene, and any mixtures of these compounds.

One exemplary polyisocyanate component that may be used in accordance with the invention has the following general formula (III): 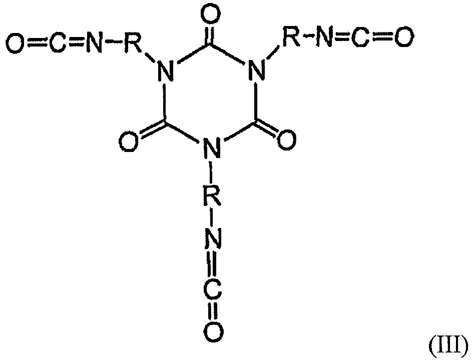 wherein R represents a C₁-C₁₅ substituted or unsubstituted alkyl group.

It is more typical, however, to use derivatives of these monomeric polyisocyanates, such as derivatives including polyisocyanates containing biuret groups as described, for example, in U.S. Pat. Nos. 3,124,605, 3,201,372 DE-OS 1,101,394; polyisocyanates containing isocyanurate groups as described, for example, in U.S. Pat. No. 3,001,973, DE-PS 1,022,789, 1,333,067 and 1,027,394 and DE-OS 1,929,034 and 2,004,048; polyisocyanates containing urethane groups as described, for example, in DE-OS 953,012, BE-PS 752,261 and U.S. Pat. Nos. 3,394,164 and 3,644,457; polyisocyanate containing carbodiimide groups as described in DE-OP 1,092,007, U.S. Pat. No. 3,152,162 and DE-OS 2,504,400, 2,537,685 and 2,552,350; and polyisocyanates containing allophanate groups as described, for example, in GB-PS 994,890, BE-PS 761,626 and NL-OS 7,102,524. All of these disclosures are incorporated herein by reference.

More typically, the modified polyisocyanates include N,N',N"-tris-(6-isocyanatohexyl)-biuret and mixtures thereof with its higher homologues and N,N',N"-tris-(6-isocyanatohexyl)-isocyanurate and mixtures thereof with its higher homologues containing more than one isocyanurate ring.

Isocyanate group-containing prepolymers and semi-prepolymers based on the monomeric simple or modified polyisocyanates exemplified above and organic polyhydroxyl compounds are also typically envisaged for use as polyisocyanate component (i). These prepolymers and semi-prepolymers generally have an isocyanate content of about 0.5 to 30% by weight, typically about 1 to 20% by weight, and are prepared in a known manner by the reaction of the above mentioned starting materials at an NCO/OH equivalent ratio of about 1.05:1 to 10:1, typically about 1.1:1 to 3:1, this reaction being optionally followed by distillative removal of any unreacted volatile starting polyisocyanates.

The prepolymers and semi-prepolymers may be prepared from low molecular weight polyhydroxyl compounds having a molecular weight of about 50 to 400, such as ethylene glycol, propylene glycol, trimethylol propane, 1,6-dihydroxy hexane; low molecular weight, hydroxyl-containing esters of these polyols with dicarboxylic acids of the type exemplified hereinafter; low molecular weight ethoxylation and/or propoxylation products of these polyols; and mixtures of the preceding polyvalent modified or unmodified alcohols.

The prepolymers and semi-prepolymers are, however, preferably prepared from the known relatively high molecular weight polyhydroxyl compounds of polyurethane chemistry which have a molecular weight of about 300 to about 8000, preferably about 1000 to 5000, as determined from the functionality and the OH number. These polyhydroxyl compounds have at least two hydroxyl groups per molecule and generally have a hydroxyl group content of about 0.5 to 17% by weight, typically about 1 to 5% by weight.

The compounds of the general formula (I) are prepared according to methods known in the art, via reaction of the corresponding primary polyamines corresponding to the general formula (IV):

X-(-NH2)ₙ (IV)

wherein n = an integer between 2 and 6 and X is as defined hereinabove, with optionally substituted maleic or fumaric acid esters corresponding to the general formula (V):

R¹OOC-CR³=CR⁴-COOR² (V)

Non-limiting examples of suitable polyamines include a diamine compound corresponding to the general formula (II) above, ethylene diamine, 1,2-diaminopropane, 1,4-diaminobutane, 1,6-diaminohexane, 2,5-diamino-2,5-dimethylhexane, 2,2,4-and/or 2,4,4-trimethyl-1,6-diaminohexane, 1,11-diaminoundecane, 1,12-diaminododecane, 1-amino-3,3,5-trimethyl-5-aminomethyl-cyclohexane, 2,4- and/or 2,6-hexahydrotoluylene diamine, 2,4'- and/or 4,4'-diamino-dicyclohexyl methane and 3,3'-dimethyl-4,4'-diamino-dicyclohexyl methane. Aromatic polyamines such as 2,4-and/or 2,6-diaminotoluene and 2,4'-and/or 4,4'-diaminodiphenyl methane are also suitable. Relatively high molecular weight polyether polyamines containing aliphatically bound primary amino groups, for example, the products marketed under the Jeffamine trademark by Texaco, are also suitable.

Non-limiting examples of optionally substituted maleic or fumaric acid esters according to the general formula (V) that are suitable for use in the preparation of the compounds corresponding the general formula (I) include dimethyl, diethyl and di-n-butyl esters of maleic acid and fumaric acid and the corresponding maleic or fumaric acid esters substituted by methyl in the 2- and/or 3-position.

According to one embodiment of the invention, the polyaspartic binder may further contain a diluent component, which may be non-reactive with the polyisocyanate, or could alternatively be able to react with the polyisocyanate. Typically, however, the diluent is non-reactive with the polyisocyanate. Non-limiting examples of a diluent component that may be used include any plasticizer used in the polymer industry. Such plasticizers will be well known to those skilled in the art. Exemplary, but non-limiting such plasticizers include phthalate plasticizers, or any of the products known as phthalate free plasticizers. Alternatively, the diluents can also be solvents known to those skilled in the art, such as aromatic hydrocarbons for example xylene or esters such as butyl acetate or ether esters, such as propoxy methyl acetate.

Other specific examples of specific plasticizers include, but are not limited to, di(isodecyl) phthalate and tributyl citrate. However, it may also be used in the absence of a diluent component, if desired.

Typically, if used, an amount of diluent up to about 1-50 wt.% by weight of the compound that is the reaction product from (a) may be used, more typically in the range of about 10-45 wt.%, still more typically in the range of about 20-40 wt.%, still more typically in the range of about 30-40 wt.%, most typically in the range of about 35-39 wt.%, such as 37.5 wt.%. According to one embodiment of the invention, an amount of about 37.5 wt.% of di(isodecyl) phthalate and acetyl tributyl citrate may be used.

According to a further embodiment, the polyaspartic binder resin may contain a pigment component in order that it may be provided in different colours to complement any specific aggregate particles, to create a decorative surface. Alternatively, the binder resin may not contain a pigment component.

Also provided in accordance with the present invention is a method for manufacturing the mixture of the invention as defined herein, the method comprising:
a) reacting at a temperature of about 100°C or below (i) a polyisocyanate component with (ii) an isocyanate-reactive component of the defined formula (I): 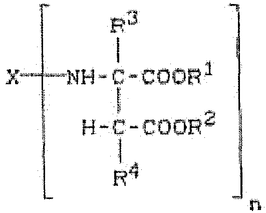 wherein:
   R¹ and R² may be the same or different and represent organic groups which are inert towards isocyanate groups at a temperature of about 100°C or below;
   R³ and R⁴ may be the same or different and represent hydrogen or organic groups which are inert towards isocyanate groups at a temperature of about 100°C or below;
   X represents an organic group which has a valency of n and is inert towards isocyanate groups at a temperature of about 100°C or below; and
   n represents an integer with a value of 1 or greater; and
b) combining an amount of a particulate aggregate material with the reaction product from step (a), such that the final mixture comprises between about 1 to about 10 parts of the product from step (a) per 100 parts of the particulate aggregate material.

The reaction in step (a) above to manufacture the compound of general formula (I) may be carried out at a temperature of between about minus 20°C to about 100°C, such as between 0-100°C. Any excess starting materials may be removed by distillation after the reaction. The reaction may be carried out in the absence of any solvents, or alternatively in the presence of suitable solvents such as methanol, ethanol, propanol, dioxane, or mixtures thereof.

The mixture of the invention is primarily intended for use in the creation of road surfacings, pathways, driveways for residential and commercial establishments, and in architectural, streetscape and hard landscaping situations such as tree-pits and planters.

Also provided in accordance with the invention is the use of a compound that is the product of a reaction between (i) a polyisocyanate component and (ii) an isocyanate-reactive component of the defined formula (I): 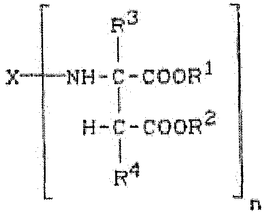 wherein:
R1 and R2 may be the same or different and represent organic groups which are inert towards isocyanate groups at a temperature of about 100°C or below;
R3 and R4 may be the same or different and represent hydrogen or organic groups which are inert towards isocyanate groups at a temperature of about 100°C or below;
X represents an organic group which has a valency of n and is inert towards isocyanate groups at a temperature of about 100°C or below; and
n represents an integer with a value of 1 or greater, in combination with an amount of a particulate aggregate material, in the creation of a surfacing comprising aggregate particles.

Also provided in accordance with the invention is a surfacing comprising a mixture as defined hereinabove.

The invention will now be described further by way of example with reference to the following figure which is intended to be illustrative only and in no way limiting upon the scope of the invention.

### EXAMPLE

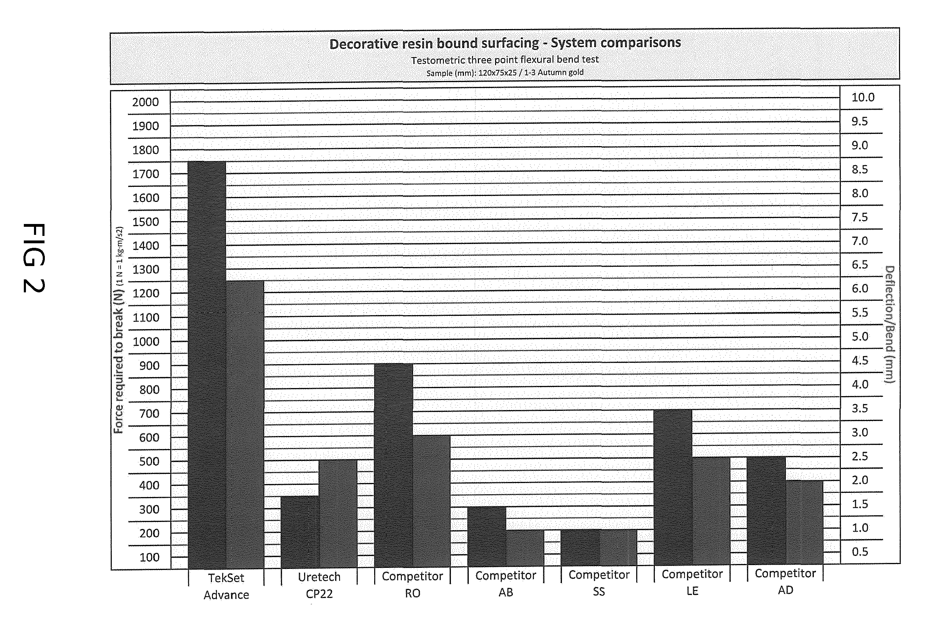

An example binder composition of the inveetion is detailed hereinbelow. This particular binder composition is denoted as the TekSet Advance binder composition. Strength tests have been carried out on this composition, as well as existing binder compositions, the results of which are illustrated in Figure 2.

To obtain the TekSet Advance binder composition, one mixes together vigorously for 2 minutes the following:
i) 95 parts of a clean, dry, dust free, aggregate known as Autumn Gold size 2-5mm (readily available in the industry); and
ii) 5 parts of a resin according to the invention consisting of:

| | |
|---|---|
| Desmophen NH 1420 | 37.5% |
| Di-isodecyl phthalate | 25.0% |
| | |
| Triacetyl citrate | 12.5% |
| Desmodur N3300 | 25.0%. |

The resin was split into a two component mixture as shown, with the Desmophen NH 1420 and di-isodecyl phthalate being separately mixed together, and the triacetyl citrate and Desmodur N3300 being separately mixed together, before the respective mixtures are then combined together.

The aggregate mixture was cast into a block of dimensions 125 mm x 75 mm x 25 mm, and left for 24 hrs to cure prior to testing.
Figure 1 shows a graph depicting the result of a three point bend test to show the strength of the polyaspartic binder in the present invention.
Figure 2 shows a graph depicting the results of strength tests of a binder according to the invention (TekSet Advance) in comparison with existing binder compositions.

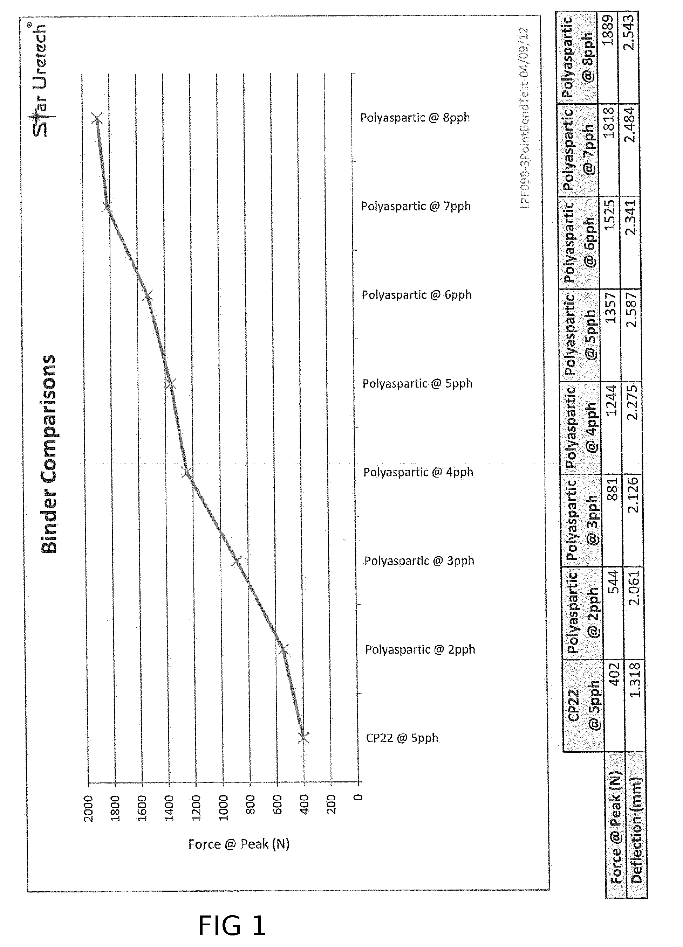

It can be seen in Figure 1 that the force required to break the surfacing bound with the commercially available CP22 binder at 5% was 400 N. In contrast, using 2% polyaspartic binder resulted in a break strength of 544 N. The 2% polyaspartic binder is therefore 25% stronger than the 5% CP22.

The 5% polyaspartic binder showed a break strength of 1357 N, over 3 times stronger than the equivalent amount of the CP22. Indeed, the break strength increases still further, with an 8% polyaspartic binder showing a break strength of 1889 N.

In Figure 2, it can be seen that the TekSet Advance binder composition according to the invention requires a much greater force to break it than all of the other existing prior art binder compositions. Indeed, it requires more than double the amount of force of any of the other products, and requires over three times more force when compared to the CP22 product, thus demonstrating its significantly enhanced strength levels. It is of course to be understood that the present invention is not intended to be restricted to the foregoing examples which are described by way of example only.

## Claims

1. A mixture comprising:
a) a compound that is the product of a reaction between (i) a polyisocyanate component and (ii) an isocyanate-reactive component of the defined formula (I): 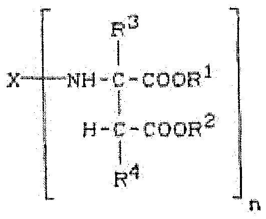 wherein:
R1 and R2 may be the same or different and represent organic groups which are inert towards isocyanate groups at a temperature of about 100°C or below;
R3 and R4 may be the same or different and represent hydrogen or organic groups which are inert towards isocyanate groups at a temperature of about 100°C or below;
X represents an organic group which has a valency of n and is inert towards isocyanate groups at a temperature of about 100°C or below; and
n represents an integer with a value of 1 or greater; and
b) an amount of a particulate aggregate material;
wherein the mixture comprises between about 1 to about 10 parts of the compound defined in (a) per 100 parts of the particulate aggregate material.

2. A mixture according to claim 1, wherein the group X represents a divalent hydrocarbon group obtained by the removal of the amino groups from compounds of the general formula (II):
H₂N - R⁵ - NH₂ (II)
wherein R⁵ may be, for example, a C₁-C₁₂ substituted or unsubstituted alkyl group, or a group that is able to introduce steric hindrance into the reaction product of components (i) and (ii) of claim 1.

3. A mixture according to claim 2, wherein the compound of the general formula (II) may be selected from compounds including 1,4-diaminobutane, 1,6-diaminohexane, 2-methyl diaminopentane, 2,2,4- and 2,4,4-trimethyl-1,6-diaminohexane, 1-amino-3,3,5-trimethyl-5-aminomethyl-cyclohexane, 4,4'-diamino-dicyclohexyl methane or 3,3-dimethyl-4,4'-diamino-dicyclohexyl methane.

4. A mixture according to any preceding claim, wherein in the the compound of general formula (I), the groups R1-R4 each are H or substituted or unsubstituted C₁-C₆ alkyl.

5. A mixture according to any preceding claim, wherein the polyisocyanate component (i) has the general formula (II):
(O=C=N)ₙ-R⁶-N=C=O (III)
wherein R⁶ represents a C₁-C₁₅ substituted or unsubstituted alkyl group, a C₁-C₆ substituted or unsubstituted cycloalkyl group, or a C₁-C₆ substituted or unsubstituted aryl group; and
wherein n has a value of 0 or greater.

6. A mixture according to claim 5, wherein the wherein when the alkyl or cycloalkyl groups are substituted, they may be substituted by one or more C₁-C₆ alkyl, cycloalkyl or aryl groups.

7. A mixture according to claim 5 or claim 6, wherein the polyisocyanate component is selected from any of the following, alone or in combination: hexamethylene diisocyanate, 2,2,4-and/or 2,4,4-trimethyl-1,6-hexamethylene diisocyanate, dodecamethylene diisocyanate, 1,4-diisocyanatocyclohexane, 1-isocyanato-3,3,5-trimethyl-5-isocyanatomethylcyclohexane (IPDI), 2,4'-and/or 4,4'-diisocyanato-dicyclohexyl methane, 2,4-and/or 4,4'-diisocyanato-diphenyl methane and mixtures of these isomers with their higher homologues, or wherein the polyisocyanate contains one or more biuret groups, or one or more isocyanurate groups, or one or more urethane groups, or one or more carbodiimide groups, or one or more allophanate groups.

8. A mixture according to claim 7, wherein the polyisocyanate component is represented by the general formula (III): 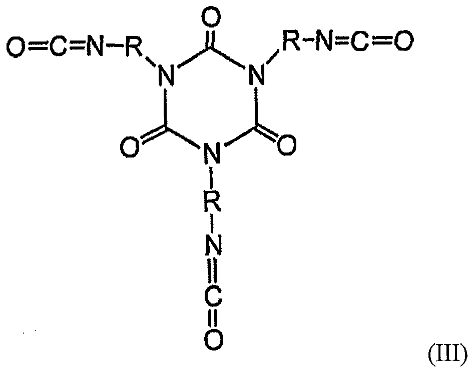 wherein R represents a C₁-C₁₅ substituted or unsubstituted alkyl group.

9. A mixture according to any preceding claim, wherein the average size of the particulate aggregate material is between about 1-10 mm.

10. A mixture according to any preceding claim, wherein the mixture further comprises a diluent and/or a pigment, wherein the diluent is optionally present in an amount of from 1-50 wt% by weight of the compound that is the reaction product from (a).

11. A mixture according to claim 10, wherein the diluent is selected from one or more of phthalate plasticizers, phthalate free plasticizers, or a solvent.

12. A method for manufacturing the mixture according to any preceding claim, the method comprising:
a) reacting at a temperature of about 100°C or below (i) a polyisocyanate component with (ii) an isocyanate-reactive component of the defined formula (I): 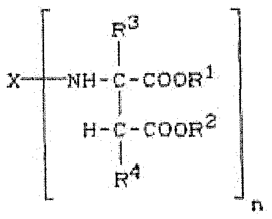 wherein:
R¹ and R² may be the same or different and represent organic groups which are inert towards isocyanate groups at a temperature of about 100°C or below;
R³ and R⁴ may be the same or different and represent hydrogen or organic groups which are inert towards isocyanate groups at a temperature of about 100°C or below;
X represents an organic group which has a valency of n and is inert towards isocyanate groups at a temperature of about 100°C or below; and
n represents an integer with a value of 1 or greater; and
b) combining an amount of a particulate aggregate material with the reaction product from step (a), such that the final mixture comprises between about 1 to about 10 parts of the product from step (a) per 100 parts of the particulate aggregate material.

13. A method according to claim 12, wherein the reaction in step (a) is carried out at a temperature of between about 0°C to about 100°C.

14. A surfacing comprising a mixture according to any of claims 1-11.

15. Use of a mixture according to any of claims 1-11 in the creation of a surfacing comprising aggregate particles.
